# EUROPÄISCHE PATENTSCHRIFT

(11) **EP 3 267 859 B1**
(45) Veröffentlichungstag und Bekanntmachung des Hinweises auf die Patenterteilung: **29.04.2020**
(21) Anmeldenummer: 16709745.0
(22) Anmeldetag: 09.03.2016
(51) Int. Cl.: A47J 31/52, A47J 43/046

(54) **VERFAHREN ZUM BETRIEB EINER ELEKTROMOTORISCH ANGETRIEBENEN KÜCHENMASCHINE**
METHOD FOR OPERATING AN ELECTRIC MOTOR-DRIVEN KITCHEN APPLIANCE
PROCÉDÉ DE FONCTIONNEMENT D'UN ROBOT MÉNAGER ENTRAÎNÉ PAR MOTEUR ÉLECTRIQUE

(30) Priorität: 11.03.2015 DE 102015103596
(43) Veröffentlichungstag der Anmeldung: 17.01.2018
(73) Patentinhaber: Vorwerk & Co. Interholding GmbH, 42275 Wuppertal (DE)
(72) Erfinder: SAUERWALD, Andres, 46238 Bottrop (DE); HILGERS, Stefan, 45357 Essen (DE); SCHOMACHER, Jutta, 42551 Velbert (DE); LANG, Torsten, 42657 Solingen (DE); GANNS, Julius, 42119 Wuppertal (DE)
(74) Vertreter: Müller, Enno
(86) Internationale Anmeldenummer: PCT/EP2016/054982
(87) Internationale Veröffentlichungsnummer: WO 2016/142405

(56) Entgegenhaltungen:
- CH-A2- 708 343
- DE-A1- 4 414 825
- DE-T2-602006 000 137
- DE-U1- 20 300 851

## Beschreibung

Die Erfindung betrifft ein Verfahren zum Betrieb einer elektromotorisch angetriebenen Küchenmaschine zum Zubereiten eines Zubereitungsgutes anhand eines Rezeptes, wobei das Zubereitungsgut in einem Gefäß der Küchenmaschine durch einen oder mehrere aufeinanderfolgende Zubereitungsschritte, insbesondere Rühren und/oder Erwärmen und/oder Zerkleinern, zubereitet wird, wobei ein aktueller Zustandsparameter des Zubereitungsgutes und/oder ein aktueller Betriebsparameter der Küchenmaschine ermittelt wird.

Elektromotorisch angetriebene Küchenmaschinen im Sinne der Erfindung sind alle halbautomatisch oder vollautomatisch betriebenen Küchenmaschinen, wie bspw. Koch-Mix-Geräte, mit deren Hilfe ein Nutzer vorteilhaft mehrere Zubereitungsschritte eines Rezeptes durchführen kann. Diese Küchenmaschinen verfügen zumeist über ein Gefäß, welchem eine Heizeinrichtung und ein Rührwerk zugeordnet sind, sodass ein in dem Gefäß enthaltenes Zubereitungsgut geheizt und/oder gerührt werden kann. Zudem kann es auch vorgesehen sein, das Zubereitungsgut zu zerkleinern, zu kneten oder ähnliches.

Im Stand der Technik ist es darüber hinaus bekannt, einen aktuellen Zustandsparameter des Zubereitungsgutes oder einen aktuellen Betriebsparameter der Küchenmaschine zu ermitteln. Ein solcher Zustandsparameter kann bspw. eine Temperatur oder ein Gewicht des Zubereitungsgutes sein. Dabei weist die Küchenmaschine entsprechende Sensoren auf, bspw. einen Temperatursensor und/oder eine Wägeeinrichtung. Ein aktueller Betriebsparameter der Küchenmaschine kann bspw. eine aktuelle Temperatur der Heizeinrichtung und/oder eine aktuelle Drehzahl des Rührwerkes sein. Mit Hilfe der ermittelten Zustandsparameter und/oder Betriebsparameter kann ein Nutzer der Küchenmaschine oder auch eine Steuereinrichtung der Küchenmaschine entscheiden, ob der tatsächliche Zustand des Zubereitungsgutes dem für ein optimales Ergebnis benötigten Zustand entspricht. Gegebenenfalls kann bei Abweichungen eine Korrektur vorgenommen werden.

Obwohl sich diese Vorgehensweise im Stand der Technik bewährt hat, ist es wünschenswert, die Unterstützung des Nutzers der Küchenmaschine bei der Zubereitung eines Zubereitungsgutes weiter zu verbessern. Insbesondere ist es gewünscht, jeden Nutzer individuell zu unterstützen.

Aus der D 203 00 851 U1 ist eine Vorrichtung zum Aufschäumen eines Getränkes, speziell ein Kaffeeautomat, bekannt, mit dem eine automatische Aufschäumung des Getränkes möglich ist. Hierbei kann der Elektromotor im Hinblick auf Betriebsparameter überwacht werden und bei auftretenden Betriebsänderungen eine Korrektur hinsichtlich einer Positionierung eines Schaumschlägers erfolgen. Aus der DE 4414 825 A1 ist eine elektromotorisch angetriebene Küchenmaschine zum Zubereiten eines Zubereitungsgutes bekannt, bei welcher eine Aufheizung des Rührgefäßes in Abhängigkeit einer Füllmengenermittlung durchgeführt werden kann. Weiter ist es aus der CH 708 343 A2 bekannt, ein Kochgerät an ein Netzwerk anschließbar vorzusehen, mittels welchem auch Rezepte aus einer Datenbank auswählbar sind. Schließlich ist es aus der DE 60 2006 000 137 T2 bekannt, bei einer elektromotorisch betriebenen Küchenmaschine ein Kommunikationsmodul vorzusehen, das zum Herunterladen von digitalen Rezeptprogrammen an einen PC oder ein Netzwerk anschließbar ist.

Zur Fortbildung des Verfahrens zum Betrieb einer elektromotorisch angetriebenen Küchenmaschine wird daher vorgeschlagen, dass die Küchenmaschine eine Information über das aktuell zur Zubereitung verwendete Rezept sowie den ermittelten Zustandsparameter und/oder Betriebsparameter an einen zentralen Datenspeicher eines Datenkommunikationsnetzwerkes übermittelt, wobei der Zustandsparameter und/oder der Betriebsparameter mit Referenzparametern für dieses Rezept verglichen wird und wobei bei einer Abweichung des Zustandsparameters und/oder Betriebsparameters von den Referenzparametern ein Korrekturvorschlag von dem zentralen Datenspeicher und/oder von Mitgliedern des Datenkommunikationsnetzwerkes übermittelt wird, wobei die Referenzparameter in dem zentralen Datenspeicher des Datenkommunikationsnetzwerkes gespeichert sind oder der Korrekturvorschlag unmittelbar von einem Datenkommunikationsgerät des Mitgliedes übermittelt wird.

Gemäß der Erfindung ist die Küchenmaschine ein Mitglied eines Datenkommunikationsnetzwerkes. Das Datenkommunikationsnetzwerk weist einen zentralen Datenspeicher sowie weitere Mitglieder auf. Das Datenkommunikationsnetzwerk kann bspw. eine sogenannte "Cloud" sein, bei welcher Daten, insbesondere Daten der Mitglieder, in einem örtlich entfernten zentralen Datenspeicher gespeichert werden. Der Zugriff auf den Datenspeicher erfolgt über das Datenkommunikationsnetzwerk, bspw. das Internet. Grundsätzlich kann es sich bei dem Datenkommunikationsnetzwerk jedoch auch um ein privates Da-tenkommunikationsnetzwerk handeln, bspw. ein firmeninternes oder familieninternes Intranet. Zur Datenkommunikation verfügen die Mitglieder, d. h. auch die Küchenmaschine, über ein Datenkommunikationsmodul, bspw. ein Funkmodul. Gemäß der Erfindung werden die Zustandsparameter und/oder Betriebsparameter der aktuellen Zubereitung an den zentralen Datenspeicher übermittelt und dort mit Referenzparametern in Bezug auf den jeweiligen Zubereitungsfortschritt des Rezeptes verglichen. Die Zustandsparameter des Zubereitungsgutes können bspw. eine Temperatur, ein Gewicht, eine Dichte, eine Farbe und/oder eine Viskosität sein. Diese Zustandsparameter werden mithilfe von Sensoren der Küchenmaschine ermittelt oder aus anderen bekannten Zustandsparametern errechnet. Bspw. wird mithilfe eines innerhalb des Gefäßes der Küchenmaschine angeordneten Temperatursensors eine Temperatur des Zubereitungsgutes oder mithilfe einer Wägeeinrichtung ein Gewicht des Zubereitungsgutes ermittelt. Für einen Vergleich dieser Zustandsparameter werden anschließend zentral gespeicherte Referenzparameter verwendet, welche dem jeweiligen gleichen Zubereitungsfortschritt des Rezeptes entsprechen. Sofern der Vergleich ergibt, dass die aktuelle Temperatur und/oder das aktuelle Gewicht von dem Referenzparameter abweicht, wird ein Korrekturvorschlag von dem zentralen Datenspeicher und/oder von Mitgliedern des Datenkommunikationsnetzwerkes erstellt. Dieser Korrekturvorschlag ist geeignet, die Zubereitung so zu korrigieren, dass das Zubereitungsgut dem nach dem Rezept erwarteten Ergebnis entspricht oder diesem zumindest sehr nahe kommt. Es ist möglich, dass die Erstellung eines Korrekturvorschlags erst dann initiiert wird, wenn die aktuell ermittelten Zustandsparameter einen festgelegten Grenzwert überschreiten. Beispielsweise kann ein Korrekturvorschlag erst ab einer Temperaturdifferenz von 5 Grad Celsius erstellt werden oder ab einer Gewichtsdifferenz von 50 Gramm. Der Korrekturvorschlag kann bspw. den Hinweis enthalten, die Temperatur der Heizeinrichtung der Küchenmaschine um einen bestimmten Betrag zu erhöhen, sodass die Temperatur des Zubereitungsgutes auf den gewünschten Wert angehoben werden kann. Falls das aktuelle Gewicht des Zubereitungsgutes das Referenzgewicht übersteigt, kann der Korrekturvorschlag bspw. eine verlängerte Heizperiode enthalten.

Es wird vorgeschlagen, dass die Referenzparameter in dem zentralen Datenspeicher des Datenkommunikationsnetzwerkes gespeichert sind. Insofern weist der zentrale Datenspeicher eine Datenbank mit einer Vielzahl von Referenzparametern zu unterschiedlichen Zustandsparametern und/oder Betriebsparametern auf, die für die Zubereitung eines Rezeptes empfohlen werden. Solche Zustandsparameter bzw. Betriebsparameter sind dabei selbstverständlich nicht nur in Bezug auf ein einziges Rezept, sondern vielmehr für eine Vielzahl unterschiedlicher Rezepte gespeichert. Durch die Speicherung in dem zentralen Datenspeicher des Datenkommunikationsnetzwerkes können eine Vielzahl von Mitgliedern des Datenkommunikationsnetzwerkes besonders einfach auf die Referenzparameter zugreifen und einen Vergleich durchführen.

Des Weiteren ist vorgesehen, dass die Referenzparameter von einem Mitglied des Datenkommunikationsnetzwerkes bei einer Zubereitung verwendete Zustandsparameter und/oder Betriebsparameter sind. Diese Referenzparameter können vorteilhaft automatisch von einer Küchenmaschine des Mitglieds an den zentralen Datenspeicher übermittelt werden, um diese auch anderen Mitgliedern zur Verfügung zu stellen. Die Referenzparameter können von den Sensoren der Küchenmaschine automatisch erfasste Parameter sein oder alternativ Parameter, welche manuell von dem Mitglied in dem zentralen Datenspeicher hinterlegt wurden. Insbesondere können die Referenzparameter bereits Korrekturen enthalten, welche das Mitglied im Laufe der Zubereitung des entsprechenden Rezeptes für das Gelingen der Zubereitung als vorteilhaft erkannt hat. Insofern kann bspw. der Betriebsparameter "Temperatur" einer Heizeinrichtung der Küchenmaschine erhöht sein oder der Betriebsparameter "Heizdauer" verlängert sein, um das gewünschte Zubereitungsergebnis zu erreichen. Insofern kann der zentrale Datenspeicher des Datenkommunikationsnetzwerks eine Vielzahl von unterschiedlichen Referenzparametern für das gleiche Rezept enthalten, welche insgesamt als Schnittmenge eine hoch qualifizierte praktische Unterstützung des Nutzers bei der Zubereitung des Zubereitungsgutes bereitstellen. Dabei ist es bspw. auch möglich, dass der Nutzer der Küchenmaschine nicht alle hinterlegten Referenzparameter zum Vergleich mit seinen aktuellen Zustandsparametern bzw. Betriebsparametern heranzieht, sondern vielmehr nur die von ausgewählten Mitgliedern. Beispielsweise kann die Auswahl dadurch begründet sein, dass die entsprechenden Mitglieder eine ähnliche Konsistenz des fertig zubereiteten Zubereitungsgutes bevorzugen. Beispielsweise können die von einem Mitglied hinterlegten Referenzparameter eine besonders hohe Drehzahl des Rührwerks vorsehen, um eine feinere Konsistenz des Zubereitungsgutes zu erreichen. Andere Nutzer wiederum schätzen bspw. eine grobere Konsistenz, sodass diese eine geringere Drehzahl des Rührwerks verwenden.

Es wird vorgeschlagen, dass der erstellte Korrekturvorschlag unmittelbar von einem Datenkommunikationsgerät des Mitgliedes übermittelt wird. Insofern ist es möglich, dass der Korrekturvorschlag nicht von dem zentralen Server des Datenkommunikationsnetzwerkes erstellt wird, sondern vielmehr von einem Rechner des Mitglieds. Dazu kann das Mitglied die von einem anderen Mitglied übermittelten Betriebsparameter und/oder Zustandsparameter kopieren oder herunterladen und einer eigenen Analyse unterziehen. Anschließend kann das Mitglied einen persönlichen Korrekturvorschlag erstellen und direkt an ein bestimmtes Mitglied übermitteln, ohne dass bspw. weitere Mitglieder auf diesen Korrekturvorschlag zugreifen können. Insgesamt kann der Nutzer der Küchenmaschine somit individuelle, hoch qualifizierte und schnelle Unterstützung bei der Zubereitung eines Zubereitungsgutes erhalten.

Der Korrekturvorschlag kann unterschiedlichste Daten enthalten. Hierzu zählen bspw. Videodaten, Audiodaten und/oder Textdaten. Eine Videodatei kann einen bestimmten Zubereitungsschritt anschaulich darstellen. Sofern der Korrekturvorschlag bspw. darin besteht, eine bestimmte Menge Wasser zu dem Zubereitungsgut hinzuzugeben bis dieses eine bestimmte Konsistenz oder Farbe erlangt hat, kann die Zugabe und auch das erwartete Ergebnis in dem Video festgehalten werden, um dem Nutzer das gewünschte Ergebnis zu veranschaulichen. Alternativ oder zusätzlich ist es auch möglich, dass der Korrekturvorschlag nicht nur im eigentlichen Wortsinn eine Korrektur beinhaltet, sondern zusätzlich auch informative Videodaten oder Audiodaten mit Vorschlägen für Begleitweine o.ä. Darüber hinaus kann auch Musik aus der Region des Rezeptes bereitgestellt werden o.ä.

Des Weiteren wird vorgeschlagen, dass der Korrekturvorschlag an die Küchenmaschine und/oder ein externes Datenkommunikationsgerät übermittelt wird. Der Korrekturvorschlag kann somit entweder direkt an die zubereitende Küchenmaschine übermittelt werden oder zusätzlich oder alternativ an ein externes Datenkommunikationsgerät des Nutzers, bspw. ein PC, Mobiltelefon, Tablet o.ä.

Der Korrekturvorschlag kann dabei auf einem Display der Küchenmaschine und/oder des externen Datenkommunikationsgerätes angezeigt werden. Dadurch ist es möglich, dass der Nutzer der Küchenmaschine den Korrekturvorschlag explizit prüfen oder auch verändern kann. Des Weiteren ist es möglich, dass der Nutzer mittels des Datenkommunikationsgerätes eine direkte Kommunikation mit einem anderen Mitglied des Datenkommunikationsnetzwerkes führt, welches einen persönlichen Korrekturvorschlag oder auch Erfahrungen zu der Zubereitung des entsprechenden Rezeptes zur Verfügung gestellt hat. Die direkte oder auch über den zentralen Datenspeicher des Datenkommunikationsnetzwerks indirekte Kommunikation zwischen verschiedenen Mitgliedern des Datenkommunikationsnetzwerkes wird somit ermöglicht und angeregt.

Vorteilhaft kann der Korrekturvorschlag Steuerungsdaten enthalten, welche anschließend von der Küchenmaschine für die Zubereitung des Zubereitungsgutes verwendet werden. Wenn der Nutzer der Küchenmaschine dies wünscht, können die Steuerungsdaten unmittelbar automatisch für die weitere Zubereitung des Zubereitungsgutes verwendet werden. Dadurch entstehen keine zeitlichen Verzögerungen durch eine Prüfung des Korrekturvorschlages durch den Nutzer. Vielmehr wird die Korrektur ohne Zutun des Nutzers vorgenommen, sodass die Verfahrensdurchführung besonders einfach und unkompliziert ist. Selbstverständlich ist es jedoch auch möglich, dass der Nutzer den Korrekturvorschlag zuerst prüft und dann freigibt, bevor die Steuerungsdaten die Küchenmaschine entsprechend dem Korrekturvorschlag steuern.

Des Weiteren kann vorgesehen sein, dass eine zeitlich wiederkehrende Abweichung eines Zustandsparameters eines in der Küchenmaschine zubereiteten Zubereitungsgutes und/oder eine zeitlich wiederkehrende Abweichung eines Betriebsparameters der Küchenmaschine gespeichert und bei künftigen Zubereitungen des gleichen und/oder eines anderen Rezeptes in Form einer Abweichung von einem rezeptgemäßen Betriebsparameter der Küchenmaschine berücksichtigt wird. Beispielsweise kann eine zeitlich wiederkehrende Abweichung eines Zustandsparameters des Zubereitungsgutes darin bestehen, dass das Zubereitungsgut stets (und insbesondere ungewollt) eine flüssigere Konsistenz aufweist als ein Zubereitungsgut gemäß Referenzparameter. In diesem Fall erkennt die Auswerteeinrichtung der Küchenmaschine oder auch eine dem zentralen Datenspeicher zugeordnete Auswerteeinrichtung, dass dieser Zustandsparameter häufig eine Abweichung zeigt und zieht entsprechende Rückschlüsse. Die Abweichung kann bspw. daraus resultieren, dass der Nutzer Lebensmittel verwendet, welche eine andere Konsistenz aufweisen als ein durchschnittliches Lebensmittel dieser Art. Insbesondere können diese Lebensmittel Tomaten, Eier, Quark oder weitere sein, welche häufig eine stark variierende Größe oder einen stark variierenden Flüssigkeitsgehalt aufweisen. In diesen Fällen können die Betriebsparameter oder ggf. auch die Zustandsparameter von vornherein so angeglichen werden, dass diese den Erfordernissen und den verwendeten Lebensmitteln gerecht werden. Zum Beispiel kann das Rezept so abgeändert werden, dass der Nutzer einen Hinweis angezeigt bekommt, dass er anstatt drei Tomaten nur zwei Tomaten verwenden soll, um dem gewünschten Zubereitungsergebnis besonders nahe zu kommen. Ebenso können auch bestimmte Betriebsparameter der Küchenmaschine auf die jeweiligen Lebensmittel angeglichen werden, bspw. kann grundsätzlich eine längere Zubereitungsdauer vorgesehen sein, um das gewünschte Ergebnis zu erreichen. Beispielsweise kann auch eine grundsätzlich höhere Drehzahl des Rührwerks vorgesehen sein, wenn bekannt ist, dass der Nutzer anstatt üblichem Haushaltszucker grundsätzlich Honig oder Agavendicksaft o.ä. verwendet.

Es wird des Weiteren vorgeschlagen, dass eine Information über zusätzlich für eine Zubereitung zur Verfügung stehende Küchengeräte an den zentralen Datenspeicher übermittelt wird. Diese zusätzlich zur Verfügung stehenden Küchengeräte sind Küchengeräte des Nutzers, welche in der Nähe der Küchenmaschine vorhanden sind. Diese Küchengeräte können bspw. zusätzliche Heizgeräte, Pürierstäbe, Backofen, Mikrowelle o.ä. sein. In diesem Sinne kann ein Korrekturvorschlag auch den Hinweis enthalten, eine bestimmte Zutat oder zumindest einen Teil des Zubereitungsgutes in dem weiteren Küchengerät zuzubereiten, um ein bestimmtes Zubereitungsergebnis zu erlangen.

Vorteilhaft kann dabei vorgesehen sein, dass die Küchengeräte automatisch mittels eines Codescanners oder einer Bilderkennungseinrichtung erfasst und identifiziert werden. Der Codescanner bzw. die Bilderkennungseinrichtung kann dabei eine Kamera eines Datenkommunikationsgerätes des Nutzers, wie bspw. eines Mobiltelefons sein, welche ein Bild der zur Verfügung stehenden Küchengeräte aufnimmt und zur Auswertung an den zentralen Datenspeicher des Datenkommunikationsnetzwerks übermittelt. Es kann sodann in dem Datenspeicher nach Korrekturvorschlägen gesucht werden, welche eine Verwendung eines oder mehrerer dieser zusätzlichen Küchengeräte vorsehen.

Im Folgenden wird die Erfindung anhand eines Ausführungsbeispiels näher erläutert.

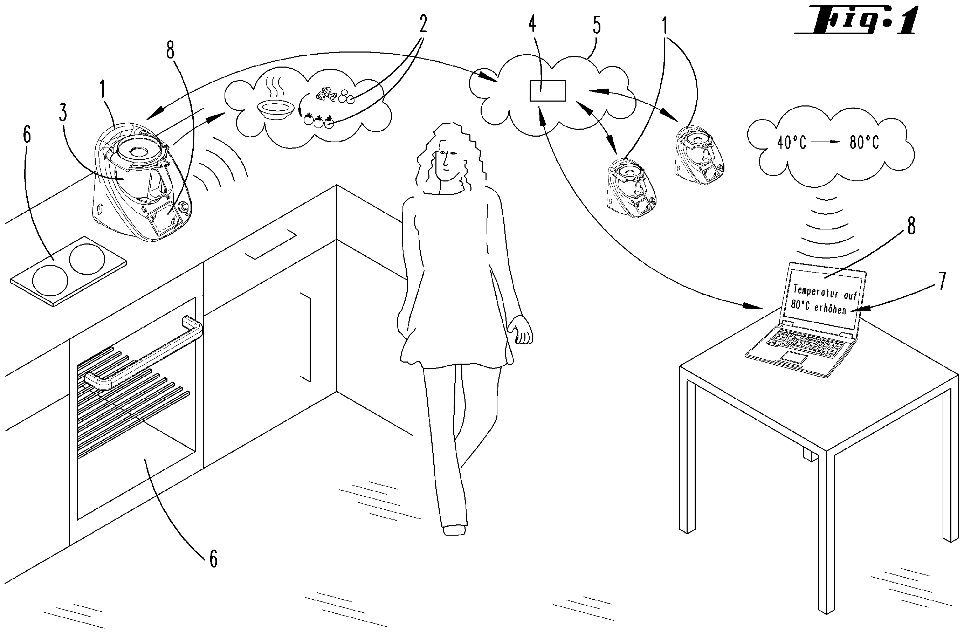

Figur 1 zeigt die Küche eines Nutzers mit einer Mehrzahl von Küchengeräten 6 und einer Küchenmaschine 1. Die Küchenmaschine 1 ist im gezeigten Ausführungsbeispiel auf einer Arbeitsplatte angeordnet. Die Küchenmaschine 1 ist als vollautomatisches Koch-Mix-Gerät ausgebildet. Dieses weist ein Gefäß 3 auf, welchem eine Heizeinrichtung und ein Rührwerk zugeordnet sind. Des Weiteren verfügt die Küchenmaschine 1 über ein Display 8, auf welchem dem Nutzer Informationen angezeigt werden können und über welches der Nutzer entsprechende Mitteilungen an die Küchenmaschine 1 übermitteln kann. Die Küche weist des Weiteren Küchengeräte 6, wie hier bspw. einen Backofen und eine zusätzliche Heizplatte auf, welche ergänzend zu der Küchenmaschine 1 der Zubereitung eines Zubereitungsgutes 2 dienen können.

Die Küchenmaschine 1 ist in ein Datenkommunikationsnetzwerk 5 eingebunden, auf welches auch andere Mitglieder, insbesondere weitere Küchenmaschinen 1, zugreifen können. Das Datenkommunikationsnetzwerk 5 weist einen zentralen Datenspeicher 4 auf, in welchem Rezepte sowie Referenzparameter zu bestimmten Rezepten gespeichert sind. Dem Datenkommunikationsnetzwerk 5 ist ebenfalls ein Datenkommunikationsgerät 7, hier ein Laptop, des Nutzers angeschlossen. Dieses Datenkommunikationsgerät 7 weist in üblicher Weise ein Display 8, auf welchem dem Nutzer Informationen angezeigt werden können.

Die Erfindung funktioniert nun so, dass der Nutzer der Küchenmaschine 1 ein Rezept auswählt, nach welchem er ein Zubereitungsgut 2 zubereiten möchte. Das Rezept kann der Nutzer zuvor dem zentralen Datenspeicher 4 des Datenkommunikationsnetzwerkes 5 entnommen haben. Die Daten des Rezeptes, insbesondere Betriebsparameter für die Küchenmaschine 1 wie Temperatureinstellungen der Heizeinrichtung und Drehzahleinstellungen für das Rührwerk, werden in einem lokalen Datenspeicher der Küchenmaschine 1 hinterlegt. Der Nutzer hat in dem gezeigten Ausführungsbeispiel ein Rezept gewählt, mit welchem ein Eintopf zubereitet werden kann. Das Zubereitungsgut 2 beinhaltet dabei bspw. Tomaten, Kartoffeln u.ä. In üblicher Weise füllt der Nutzer das Zubereitungsgut 2 in das Gefäß 3 der Küchenmaschine 1 ein und startet sodann den Betrieb der Küchenmaschine 1, welcher ein Heizen des Zubereitungsgutes 2 bei gleichzeitigem Durchmischen mittels des Rührwerkes beinhaltet. Dabei verwendet die Küchenmaschine 1 die nach dem Rezept vorgegebenen Betriebsparameter der Küchenmaschine 1 bspw. eine bestimmte Heiztemperatur der Heizeinrichtung.

Während der Zubereitung des Zubereitungsgutes 2 messen der Küchenmaschine 1 zugeordnete Sensoren die aktuellen Zustandsparameter des Zubereitungsgutes 2, hier bspw. die Temperatur des Zubereitungsgutes 2. Der Temperatursensor misst aktuell bspw. eine Temperatur des Zubereitungsgutes 2 von 40 Grad Celsius. Dieser gemessene Zustandsparameter wird mit einer Information über das verwendete Rezept und den aktuellen Zubereitungsfortschritt an den zentralen Datenspeicher 4 des Datenkommunikationsnetzwerkes 5 übermittelt. Auf diesen zentralen Datenspeicher 4 greifen auch andere Mitglieder des Datenkommunikationsnetzwerkes 5 zu und hinterlegen dort die bei einer Zubereitung des gleichen Rezeptes gemessenen Zustandsparameter. Alle in Bezug auf den gleichen Zubereitungsfortschritt ermittelten Zustandsparameter bilden in dem zentralen Datenspeicher 4 eine Datenbank mit einer Vielzahl von Referenzparametern.

Der aktuell von dem Nutzer der Küchenmaschine 1 gespeicherte Zustandsparameter wird nun mit den Referenzparametern verglichen. Beispielsweise kann ein Durchschnitt aller Referenzparameter zum Vergleich herangezogen werden. Der Referenzparameter, welcher bei anderen Mitgliedern des Datenkommunikationsnetzwerkes 5 zu einem optimalen Zubereitungsergebnis geführt hat, ist im Durchschnitt bspw. eine Temperatur von 80 Grad Celsius, welche von dem aktuell gemessenen Zustandsparameter (40 Grad Celsius) abweicht. Die Referenzparameter beinhalten somit eine Korrektur, welche die weiteren Mitglieder des Datenkommunikationsnetzwerkes in dem zentralen Datenspeicher 4 hinterlegt haben, um anderen Mitgliedern einen Hinweis auf eine notwendige Abweichung von dem Rezept zu geben.

In dem gezeigten Ausführungsbeispiel wird der Korrekturvorschlag dem Nutzer auf dem Display 8 seines Datenkommunikationsgerätes 7 angezeigt. Beispielsweise kann dies konkret der Hinweis sein "Achtung, Temperatur auf 80 Grad Celsius erhöhen". Des Weiteren kann der Nutzer bspw. persönliche Informationen von Mitgliedern des Datenkommunikationsnetzwerkes 5 erhalten. Dabei kann auch die Möglichkeit vorgesehen sein, mittels des Datenkommunikationsgerätes 7 eine direkte Kommunikationsverbindung mit einem anderen Mitglied des Datenkommunikationsnetzwerkes 5 herzustellen, um eine noch individuellere und direktere Hilfestellung zu bekommen.

Es kann nun gemäß einer Verfahrensführung vorgesehen sein, dass der Nutzer die Änderung des Betriebsparameters "Temperatur der Heizeinrichtung" auf 80 Grad Celsius mittels des Datenkommunikationsgerätes 7 zu bestätigen hat. Dabei wird der Betriebsparameter der Küchenmaschine 1 erst nach erfolgter Bestätigung durch den Nutzer für die Zubereitung übernommen. Gemäß einer alternativen Verfahrensführung kann es vorgesehen sein, dass der zu ändernde Betriebsparameter dem Nutzer nur informativ auf dem Display 8 des Datenkommunikationsgerätes 7 (oder auch auf dem Display 8 der Küchenmaschine 1 angezeigt wird und sodann vollautomatisch von der Küchenmaschine 1 übernommen wird, um die Heizeinrichtung zur Erhöhung der Temperatur zu steuern.

Es kann zudem vorgesehen sein, dass ein Korrekturvorschlag erst dann unterbreitet wird, wenn der aktuelle Zustandsparameter, d.h. die aktuelle Temperatur, eine bestimmte Abweichung von dem Referenzparameter aufweist. Beispielsweise kann eine Temperaturabweichung von 5 Grad Celsius noch keine Änderung des Betriebsparameters der Küchenmaschine 1, d.h. der aktuellen Einstellung der Heizeinrichtung, zur Folge haben, während eine Abweichung von 10 Grad Celsius zu einer Änderung des Betriebsparameters führt. Im zweitgenannten Fall kann der von dem zentralen Datenspeicher 4 des Datenkommunikationsnetzwerkes 5 erarbeitete Korrekturvorschlag Steuerungsdaten enthalten, welche geeignet sind, die Küchenmaschine 1 so zu steuern, dass das gewünschte Zubereitungsergebnis erreicht wird.

Bei einer wiederholten Zubereitung des gleichen Rezeptes können wiederkehrende Abweichungen in der Konsistenz des Zubereitungsgutes 2 auftreten, bspw. ein zu flüssiges Endergebnis des Zubereitungsgutes 2. Dabei kann durch einen Vergleich mit entsprechenden Referenzparametern der Korrekturvorschlag erarbeitet werden, dass der Nutzer der Küchenmaschine 1 vorteilhaft nur eine geringere Menge eines bestimmten Lebensmittels verwenden sollte, da dieses überdurchschnittlich wasserhaltig ist und somit zu einem zu flüssigen Zubereitungsgut 2 führt. Die Feststellung dieser wiederkehrenden Abweichung kann auch für Korrekturvorschlag künftiger Zubereitungen des gleichen Rezeptes zur Verfügung zu stehen. Bspw. kann dem Nutzer von vornherein eine abweichende Menge eines Lebensmittels vorgeschlagen werden, bspw. anstatt drei Tomaten nur zwei.

Zusätzlich können auch die weiteren Küchengeräte 9, d.h. der Backofen oder die zusätzliche Heizplatte in die Zubereitung des Zubereitungsgutes 2 integriert werden. Insbesondere ist es möglich, dass Korrekturvorschläge, welche aus dem zentralen Datenspeicher 4 des Datenkommunikationsnetzwerkes 5 oder unmittelbar von Mitgliedern des Datenkommunikationsnetzwerkes 5 abgerufen werden können, eine begleitende Warmhaltung zumindest von Anteilen des Zubereitungsgutes 2 in diesen Küchengeräten 9 empfehlen.

Das vorgenannte Ausführungsbeispiel erläutert nur eine einzige mögliche Verfahrensführung des erfindungsgemäßen Verfahrens zum Betrieb der elektromotorisch angetriebenen Küchenmaschine 1. Es versteht sich von selbst, dass eine Vielzahl weiterer Ausführungsvarianten zur Verfügung steht, welche unterschiedliche Rezepte, Zustandsparameter, Betriebsparameter, weitere Küchengeräte 9 usw. vorsehen können. Insofern ist das gezeigte Ausführungsbeispiel in keinster Weise für die Erfindung beschränkend.

### Bezugszeichenliste:

- 1: Küchenmaschine
- 2: Zubereitungsgut
- 3: Gefäß
- 4: Zentraler Datenspeicher
- 5: Datenkommunikationsnetzwerk
- 6: Küchengerät
- 7: Datenkommunikationsgerät
- 8: Display

## Patentansprüche

1. Verfahren zum Betrieb einer elektromotorisch angetriebenen Küchenmaschine (1) zum Zubereiten eines Zubereitungsgutes (2) anhand eines Rezeptes, wobei das Zubereitungsgut (2) in einem Gefäß (3) der Küchenmaschine (1) durch einen oder mehrere aufeinanderfolgende Zubereitungsschritte, insbesondere Rühren und/oder Erwärmen und/oder Zerkleinern, zubereitet wird, wobei ein aktueller Zustandsparameter des Zubereitungsgutes (2) und/oder ein aktueller Betriebsparameter der Küchenmaschine (1) ermittelt wird, **dadurch gekennzeichnet, dass** die Küchenmaschine (1) eine Information über das aktuell zur Zubereitung verwendete Rezept sowie den ermittelten Zustandsparameter und/oder Betriebsparameter an einen zentralen Datenspeicher (4) eines Datenkommunikationsnetzwerkes (5) übermittelt, wobei der Zustandsparameter und/oder der Betriebsparameter mit Referenzparametern für dieses Rezept verglichen wird und wobei bei einer Abweichung des Zustandsparameters und/oder Betriebsparameters von den Referenzparametern ein Korrekturvorschlag von dem zentralen Datenspeicher (4) und/oder von Mitgliedern des Datenkommunikationsnetzwerkes (5) übermittelt wird, wobei die Referenzparameter in dem zentralen Datenspeicher (4) des Datenkommunikationsnetzwerkes (5) gespeichert sind oder der Korrekturvorschlag unmittelbar von einem Datenkommunikationsgerät (7) des Mitgliedes übermittelt wird.

2. Verfahren nach Anspruch 1, **dadurch gekennzeichnet, dass** die Referenzparameter von einem Mitglied des Datenkommunikationsnetzwerkes (5) bei einer Zubereitung verwendete Zustandsparameter und/oder Betriebsparameter sind.

3. Verfahren nach einem der vorhergehenden Ansprüche, **dadurch gekennzeichnet, dass** der Korrekturvorschlag an die Küchenmaschine (1) und/oder ein externes Datenkommunikationsgerät (7) übermittelt wird.

4. Verfahren nach einem der vorhergehenden Ansprüche, **dadurch gekennzeichnet, dass** der Korrekturvorschlag auf einem Display (8) der Küchenmaschine (1) und/oder des externen Datenkommunikationsgerätes (7) angezeigt werden.

5. Verfahren nach einem der vorhergehenden Ansprüche, **dadurch gekennzeichnet, dass** der Korrekturvorschlag Steuerungsdaten enthält, welche anschließend von der Küchenmaschine (1) für die Zubereitung des Zubereitungsgutes (2) verwendet werden.

6. Verfahren nach einem der vorhergehenden Ansprüche, **dadurch gekennzeichnet, dass** eine zeitlich wiederkehrende Abweichung eines Zustandsparameters eines in der Küchenmaschine (1) zubereiteten Zubereitungsgutes (2) und/oder eine zeitlich wiederkehrende Abweichung eines Betriebsparameters der Küchenmaschine (1) gespeichert und bei künftigen Zubereitungen des gleichen und/oder eines anderen Rezeptes in Form einer Abweichung von einem rezeptgemäßen Betriebsparameter der Küchenmaschine (1) berücksichtigt wird.

7. Verfahren nach einem der vorhergehenden Ansprüche, **dadurch gekennzeichnet, dass** eine Information über zusätzlich für eine Zubereitung zur Verfügung stehende Küchengeräte (6) an den zentralen Datenspeicher (4) übermittelt wird.

8. Verfahren nach Anspruch 7, **dadurch gekennzeichnet, dass** die Küchengeräte (6) automatisch mittels eines Codescanners oder einer Bilderkennungseinrichtung erfasst und identifiziert werden.

## Claims

1. A method for operating an electric motor-driven kitchen appliance (1) for preparing a material (2) to be prepared based on a recipe, wherein the material (2) to be prepared is prepared in a vessel (3) of the kitchen appliance (1) via one or a plurality of consecutive preparation steps, in particular stirring and/or heating and/or chopping, wherein a current status parameter of the material (2) to be prepared and/or a current operating parameter of the kitchen appliance (1) is determined, **characterized in that** the kitchen appliance (1) transmits information relating to the recipe currently being used for preparation, as well as the determined status parameter and/or operating parameter to a central data storage means (4) of a data communications network (5), wherein the status parameter and/or the operating parameter is compared to reference parameters for this recipe, and wherein, in the event of a deviation of the status parameter and/or operating parameter from the reference parameters, a correction suggestion is transmitted by the central data storage means (4) and/or by members of the data communications network (5), wherein the reference parameters are stored in a central data storage means (4) of the data communications network (5) or the correction proposal is transmitted directly by a data communications device (7) of the member.

2. The method according to claim 1, **characterized in that** the reference parameters are status parameters and/or operating parameters used by a member of the data communications network (5) in response to a preparation.

3. The method according to one of the preceding claims, **characterized in that** the correction proposal is transmitted to the kitchen appliance (1) and/or an external data communications device (7).

4. The method according to one of the preceding claims, **characterized in that** the correction proposal is displayed on a display (8) of the kitchen appliance (1) and/or of the external data communications device (7).

5. The method according to one of the preceding claims, **characterized in that** the correction proposal includes control data, which are subsequently used by the kitchen appliance (1) for the preparation of the material (2) to be prepared.

6. The method according to one of the preceding claims, **characterized in that** a chronologically recurring deviation of a status parameter of a material (2) to be prepared is prepared in the kitchen appliance (1) and/or a chronologically recurring deviation of an operating parameter of the kitchen appliance (1) is stored and is considered in the future preparation of the same and/or of a different recipe in the form of a deviation from an operating parameter of the kitchen appliance (1) according to the recipe.

7. The method according to one of the preceding claims, **characterized in that** information relating to the kitchen devices (6), which are additionally available for a preparation, are transmitted to the central data storage means (4).

8. The method according to claim 7, **characterized in that** the kitchen devices (6) are detected and identified automatically by means of a code scanner or image recognition device.

## Revendications

1. Procédé pour faire fonctionner un appareil de cuisine(1) à moteur électrique pour préparer un produit à préparer (2) sur la base d'une recette, dans lequel le produit à préparer (2) est préparé dans une cuve (3) de l'appareil de cuisine (1) par une ou plusieurs étapes de préparation successives, en particulier par agitation et/ou chauffage et/ou broyage, dans lequel un paramètre d'état actuel du produit à préparer (2) et/ou un paramètre de fonctionnement actuel de l'appareil de cuisine (1) est déterminé, **caractérisé en ce que** l'appareil de cuisine (1) transmet des informations sur la recette actuellement utilisée pour la préparation, ainsi que le paramètre d'état et/ou le paramètre de fonctionnement déterminé à une mémoire de données centrale (4) d'un réseau de communication de données (5), dans lequel le paramètre d'état et/ou le paramètre de fonctionnement est comparé à des paramètres de référence pour cette recette et dans lequel, en cas d'écart du paramètre d'état et/ou du paramètre de fonctionnement par rapport aux paramètres de référence, une proposition de correction est transmise par la mémoire centrale de données (4) et/ou par des membres du réseau de communication de données (5), dans lequel les paramètres de référence sont enregistrés dans la mémoire centrale de données (4) du réseau de communication de données (5) ou la proposition de correction est transmise directement par un dispositif de communication de données (7) du membre.

2. Procédé selon la revendication 1, **caractérisé en ce que** les paramètres de référence sont des paramètres d'état et/ou des paramètres de fonctionnement utilisés par un membre du réseau de communication de données (5) pendant une préparation.

3. Procédé selon l'une des revendications précédentes, **caractérisé en ce que** la proposition de correction est transmise à l'appareil de cuisine (1) et/ou à un dispositif externe de communication de données (7).

4. Procédé selon l'une des revendications précédentes, **caractérisé en ce que** la proposition de correction est affichée sur un écran (8) de l'appareil de cuisine (1) et/ou du dispositif externe de communication de données (7).

5. Procédé selon l'une des revendications précédentes, **caractérisé en ce que** la proposition de correction contient des données de commande qui sont ensuite utilisées par l'appareil de cuisine (1) pour la préparation du produit à préparer (2).

6. Procédé selon l'une des revendications précédentes, **caractérisé en ce qu'**un écart récurrent dans le temps d'un paramètre d'état d'un produit à préparer (2) qui est préparé dans l'appareil de cuisine (1) et/ou un écart récurrent dans le temps d'un paramètre de fonctionnement de l'appareil de cuisine (1) est mémorisé et est pris en compte dans les préparations futures de la même recette et/ou d'une recette différente sous la forme d'un écart d'un paramètre de fonctionnement de l'appareil de cuisine (1) selon la recette.

7. Procédé selon l'une des revendications précédentes, **caractérisé en ce qu'**une information sur des appareils de cuisine (6) disponibles en plus pour une préparation sont transmises à la mémoire centrale de données (4).

8. Procédé selon la revendication 7, **caractérisé en ce que** les appareils de cuisine (6) sont automatiquement détectés et identifiés au moyen d'un lecteur optique de code ou d'un dispositif de reconnaissance d'image.
